# EUROPEAN PATENT APPLICATION

(11) **EP 1 835 643 A1**
(43) Date of publication of application: **19.09.2007**
(21) Application number: 07005059.6
(22) Date of filing: 12.03.2007
(51) Int. Cl.: H04H 1/00

(54) **Method for simultaneously outputting first and second digital broadcast data in a digital broadcast receiver**

(30) Priority: 17.03.2006 KR 20060024834
(71) Applicant: Samsung Electronics Co., Ltd., Yeongtong-gu Suwon-si, Gyeonggi-do (KR)
(72) Inventor: Lim, Dong-Soo, Suwon-si, Gyeonggi-do (KR); Park, Young-Sik, Suwon-si, Gyeonggi-do (KR)
(74) Representative: Lang, Johannes

(57) **Abstract**

Disclosed is a method for outputting a digital broadcast with a digital broadcast receiver terminal. The method includes storing first digital broadcast data as second digital broadcast data by the digital broadcast receiver terminal from a moment when an incoming call is connected while the first digital broadcast data is outputted and outputting the first and second digital broadcast data simultaneously to a digital broadcast output screen when connection of the incoming call is terminated. According to the method, a portion of a digital broadcast, which a user fails to watch due to an incoming call, is stored and, after the call, outputted on a separate screen.

## Description

### BACKGROUND OF THE INVENTION

### 1. Field of the Invention

The present invention relates to a method for outputting a digital broadcast with a digital broadcast receiver terminal.

### 2. Description of the Related Art

As is generally known, digital broadcasting services have been developed to replace conventional analog broadcasting services and provide users with better video and audio experiences. Digital broadcasting services are classified into a satellite digital broadcasting service and a ground wave digital broadcasting service.

The satellite digital broadcasting service, which aims to be a mobile service, enable users to watch multi-channel multimedia broadcasts via portable receivers (e.g., portable telephones and personal information terminals) or vehicular receivers at any time and place.

The ground wave digital broadcasting service, which is based on Digital Audio Broadcasting (DAB) technology, provides mobile receivers with multimedia broadcasts via VHF channel 12, which is currently out of service. Particularly, the ground wave digital broadcasting service uses multiple channels and transmits a combination of television, radio, and data broadcasts.

In line with recent development in digital broadcasting and telecommunication technologies, much attention is paid to a digital broadcasting service, which enables users on the move to watch digital broadcasts. Particularly, a Digital Multimedia Broadcasting (DMB) service using telecommunication terminals is in the spotlight.

When users of digital broadcast receiver terminals have an incoming call while watching digital broadcasts with the terminals, they cannot simultaneously watch the broadcasts while communicating with the caller. This means that, when users want to watch the missed part of the digital broadcast, they are restricted to watching rebroadcasts after finishing the call.

### SUMMARY OF THE INVENTION

Accordingly, the present invention has been made to solve the abovementioned problems occurring in the conventional art. An object of the present invention is to provide a method for outputting a digital broadcast with a digital broadcast receiver terminal so that a user can conveniently watch a part of the digital broadcast, which the user has failed to watch due to incoming call connection while watching the broadcast.

In order to accomplish this aspect, there is provided a method for outputting a digital broadcast with a digital broadcast receiver terminal, the method including storing first digital broadcast data as second digital broadcast data by the digital broadcast receiver terminal from a moment when an incoming call is connected while the first digital broadcast data is outputted and outputting the first and second digital broadcast data simultaneously to a digital broadcast output screen when connection of the incoming call is terminated.

Preferably, the method further includes establishing a data link with an external device when a user makes a request for external device output and outputting one of the first and second digital broadcast data to the external device.

### BRIEF DESCRIPTION OF THE DRAWINGS

The above and other objects, features, and advantages of the present invention will be more apparent from the following detailed description taken in conjunction with the accompanying drawings, in which:
FIG. 1 is a block diagram showing the construction of a digital broadcast receiver terminal according to the present invention;
FIGs. 2A and 2B are flowcharts showing a series of operation steps of a digital broadcast receiver terminal according to the present invention;
FIG. 3 is a flowchart showing in detail outputting first and second digital broadcast data to main and auxiliary screens, respectively, in the operation steps shown in FIG. 2A; and
FIGs. 4A and 4B are views for illustrating the operation steps of a digital broadcast receiver terminal according to the present invention.

### DETAILED DESCRIPTION OF THE PREFERRED EMBODIMENT

Hereinafter, preferred embodiments of the present invention will be described with reference to the accompanying drawings. In the following description of the present invention, a detailed description of known functions and configurations incorporated herein is omitted for clarity..

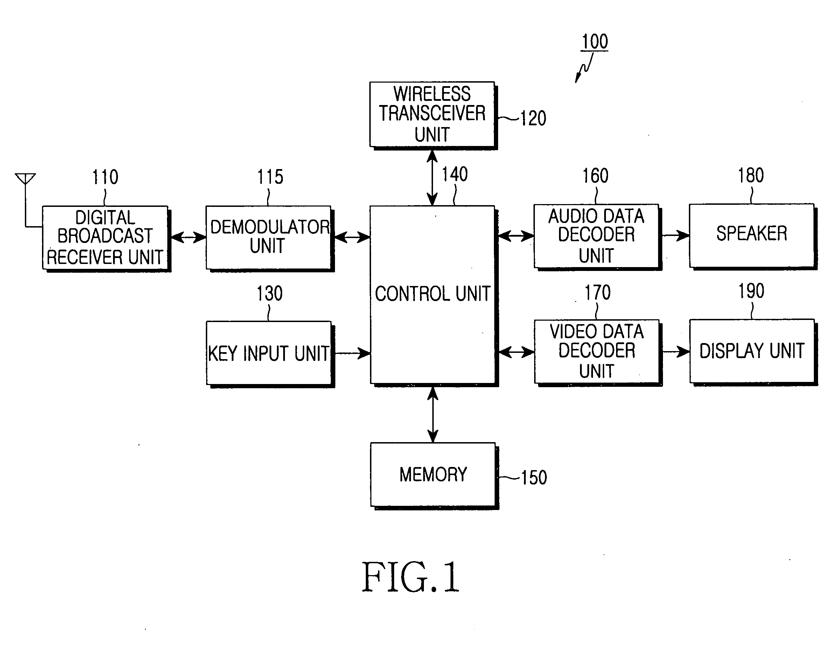

FIG. 1 is a block diagram showing the construction of a digital broadcast receiver terminal according tithe present invention.

Referring to FIG. 1, the digital broadcast receiver terminal 100 includes a digital broadcast receiver unit 110, a demodulator unit 115, a wireless transceiver unit 120, a key input unit 130, a control unit 140, a memory 150, an audio data decoder unit 160, a video data decoder unit 170, a speaker 180, and a display unit 190. The speaker 180 and the display unit 190 function as output units.

The digital broadcast receiver unit 110 receives digital broadcast data on a specific channel (e.g., first digital broadcast data) under the control of the control unit 140 and outputs the received data to the demodulator unit 115. The demodulator unit 115 demodulates the digital broadcast data, which has been received by the digital broadcast receiver unit 110, into a digital data stream and outputs the stream to the control unit 140. The wireless transceiver unit 120 transmits/receives RF signals both to and from a base station (not shown) via an antenna under the control of the control unit 140. The key input unit 130 has character keys, numeric keys, and various types of function keys and outputs a key input signal to the control unit 140 in response to the user's key input.

The control unit 140 controls the overall operation of the digital broadcast receiver terminal 100 according to the present invention. In addition, the control unit 140 parses the digital broadcast stream, which has been outputted by the demodulator unit 115, into an audio data stream and a video data stream and outputs these streams to the speaker 180 as well as the display unit 190 via the audio data decoder unit 160 and the video data decoder unit 170, respectively.

When the wireless transceiver unit 120 has an incoming call while the first digital broadcast data, which the digital broadcast receiver unit 110, has received, is being outputted, the control unit 140 notifies the user of the incoming call by means of a text or sound. Preferably, the control unit 140 displays a message inquiring whether the user wants to continue the output of the first digital broadcast data when the call is connected. When the user replies in the affirmative , the control unit 140 connects the call while continuously outputting the first digital broadcast data.

After connecting the incoming call, the control unit 140 stops outputting audio signals regarding the first digital broadcast data and starts outputting audio signals regarding the connected call. The control unit 140 stores the first digital broadcast data, which has been outputted, from the moment when the call is connected. The data stored in the memory 150 is differentiated from the first digital broadcast data and hereinafter will be referred to as second digital broadcast data.

When the call is over, the control unit 140 controls the first and second digital broadcast data in such a manner that they are simultaneously outputted to the screen of the display unit 190, particularly digital broadcast output screen. Preferably, the first and second digital broadcast data are outputted to main and auxiliary screens, respectively, in a picture-in-picture mode. According to the picture-in-picture mode, the screen is divided into main and auxiliary screens, and the latter is smaller than the former.

When the user makes a request to edit the auxiliary screen while the first and second digital broadcast data are outputted to the main and auxiliary screens, respectively, the control unit 140 can edit the auxiliary screen based on an editing menu selected by the user.

More particularly, the control unit 140 displays an auxiliary screen editing menu in a predetermined position on the screen of the display unit 190 at the user's request for editing the auxiliary screen, so that the user can selected a desired auxiliary screen editing menu. The auxiliary screen editing menu includes a menu item for positioning the auxiliary screen in the horizontal and vertical directions, a menu item for adjusting the size of the auxiliary screen, and a menu item for switching the images displayed on the main and auxiliary screens with each other.

After completely outputting the second digital broadcast data stored in the memory 150, the control unit 140 deletes the auxiliary screen so that the first digital broadcast data, which has been outputted to the main screen, is outputted in a full screen mode.

When the user makes a request for external device output (e.g., TV-OUT request) while the digital broadcast is outputted, the control unit 140 establishes a wired or wireless data link with the external device and selectively outputs one of the first and second digital broadcast data to the external device. Particularly, the control unit 140 can output the first digital broadcast data to the display unit 190 so as to be displayed in the full screen mode and the second digital broadcast data to the external device.

The memory 150 can include a program memory and data memories. According to the present embodiment of the present invention, the memory 150 stores information necessary for operation control of the digital broadcast receiver terminal 100, as well as information selected in conformity with the user's choices. Particularly, the memory 150 includes a ROM for storing an operating algorithm, which is accessed via the control unit 140 for overall operation of the digital broadcast receiver terminal 100, and a RAM for storing data in accordance with control commands when the control unit 140 processes data.

According to the present invention, the memory 150 stores the first digital broadcast data output, from the moment when an incoming call is connected while the first digital broadcast data is outputted.

The audio data decoder unit 160 receives the audio data stream under the control of the control unit 140 and decodes the stream into analog audio signals, which are outputted to the speaker 180. The video data decoder unit 170 receives the video data stream under the control of the control unit 140 and decodes the stream into analog video signals, which are outputted to the display unit 190. The speaker 180 and the display unit 190 act as output units of the digital broadcast receiver terminal 100.

The display unit 190, which can be made of an LCD, displays various pieces of data created by the digital broadcast receiver terminal 100 and digital broadcast output decoded by the video processing unit. When the display unit 190 is made of a touch screen type LCD, it can also be used as an input unit. The display unit 190 separately displays the first and second digital data on the main and auxiliary screens under the control of the control unit 140. The key input unit 130 can be used to adjust the size or position of the auxiliary screen. As such, the user in accordance with his/her preference can modify the screen on the display unit 190.

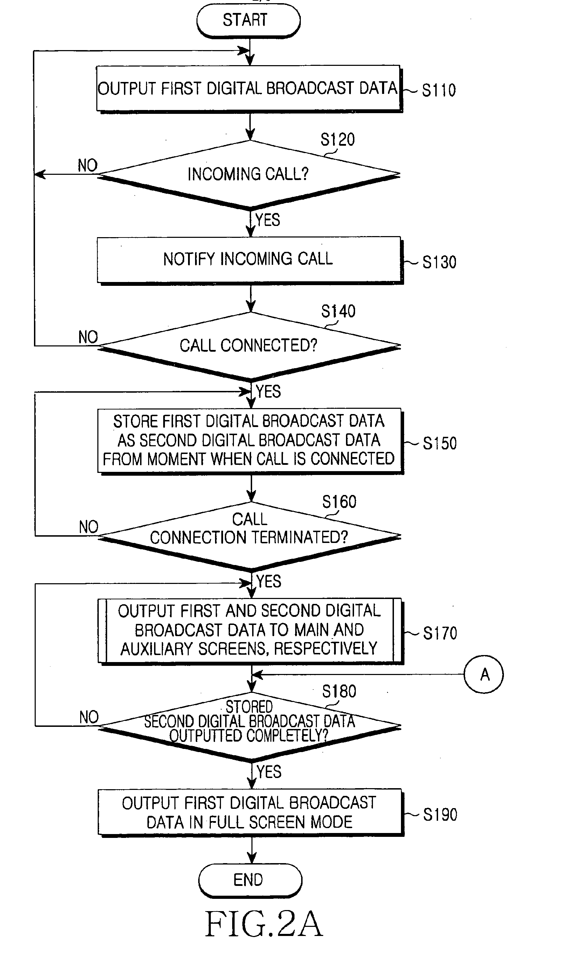

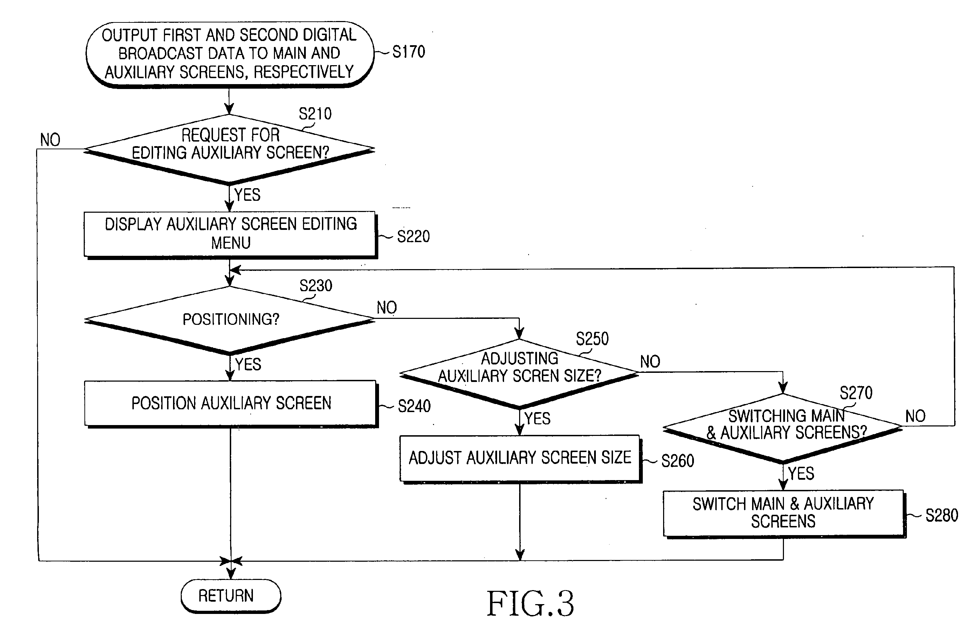

FIGs. 2A and Bb are flowcharts showing a series of operation steps of a digital broadcast receiver terminal according to the present invention, and FIG. 3 is a flowchart showing in detail steps for outputting first and second digital broadcast data to main and auxiliary screens, respectively, in the operation steps shown in FIG. 2A.

The operation steps shown in FIGs. 2A to 3 will now be described herein with reference to FIG. 1. The control unit 140 outputs the first digital broadcast data, which has been received by the digital broadcast receiver unit in step 110, via the output unit S 110. The control unit 140 checks whether the wireless transceiver unit 120 has an incoming call while the first digital broadcast data is outputted in step- S120. When the wireless transceiver unit 120 has an incoming call, the control unit 140 notifies the user of the incoming call by means of a text or sound in step S130. The control unit 140 checks whether the call is connected in accordance with the user's speech connection request, e.g. speech key input (S 140). When the incoming call is connected, the control unit 140 stores the first digital broadcast data, which has been outputted, in the memory 150 from the moment when the call is connected in step S 150. The portion of the first digital broadcast data stored in the memory 150 is referred to as second digital broadcast data. After connecting the incoming call, the control unit 140 preferably stops outputting audio signals regarding the first digital broadcast data and starts outputting audio signals regarding the connected call.

The control unit 140 checks if the call connection is terminated in step S160. Particularly, the control unit 140 checks if the call connection is terminated at the user's request for ending the call.

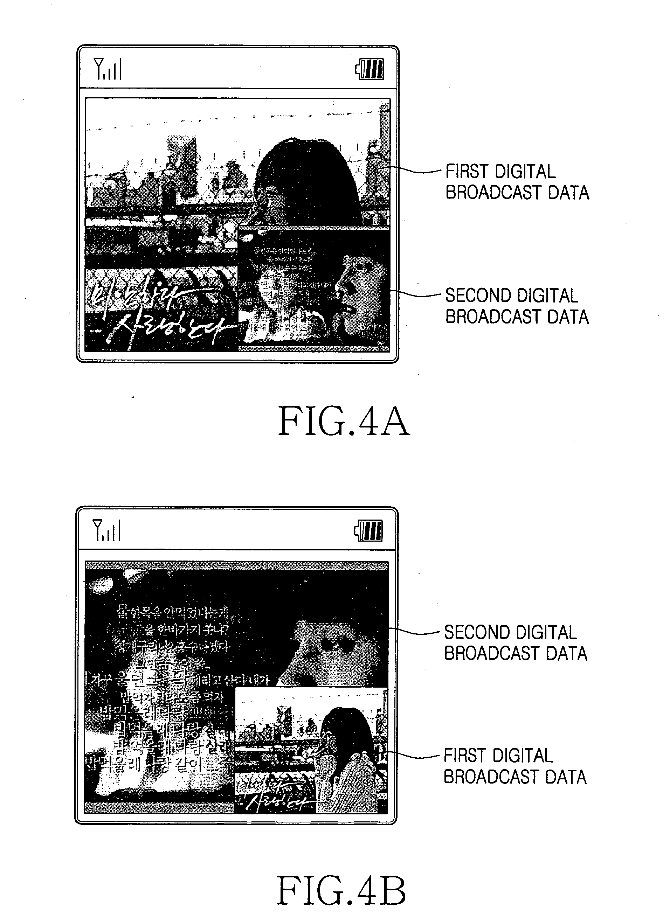

When the call connection is terminated at the user's request for ending the speech, the control unit 140 outputs the first and second digital broadcast data to the main and auxiliary screens of the display unit 190, respectively (S 170). Particularly, the control unit 140 outputs the first digital broadcast data to the main screen and the second digital broadcast data to the auxiliary screen as shown in FIG. 4a. Preferably, the first and second digital broadcast data are outputted to the main and auxiliary screens, respectively, in a picture-in-picture mode.

When the digital broadcast receiver terminal 100 is equipped with two speakers 180, the control unit 140 can output the audio signals of the digital broadcast data, which are outputted to the main and auxiliary screens, to both speakers 180, respectively.

When an external output device is connected to the digital broadcast receiver terminal 100, the control unit 140 can output the audio signals of the digital broad data, which is outputted to the auxiliary screen, to the external output device. The external output device may be an external speaker or earphone.

Upon the user making a request to edit the auxiliary screen while the first and second digital broadcast data are outputted to the main and auxiliary screens, respectively, the control unit 140 edits the auxiliary screen based on an editing menu selected by the user. The step for editing the auxiliary screen will be described in detail herein with reference to FIG. 3.

Referring to FIG.3, the control unit 140 checks whether the user makes a request for editing the auxiliary screen while the first and second digital data are outputted to the main and auxiliary screens, respectively in step S210.

The control unit 140 displays an auxiliary screen editing menu on the display unit 190 at the user's request for editing the auxiliary screen in stepS220. Preferably, the control unit 140 displays the auxiliary screen editing menu in a pop-up manner. The auxiliary screen editing menu includes a menu item for positioning the auxiliary screen in the horizontal and vertical directions, a menu item for adjusting the size of the auxiliary screen, and a menu item for switching the images displayed on the main and auxiliary screens with each other.

The control unit 140 checks whether the menu item for positioning the auxiliary screen is selected in step S230.

Upon the menu item for positioning the auxiliary screen , the control unit 140 positions the auxiliary screen in accordance with the user's choices in step S240. Particularly, the user can position the auxiliary screen in the horizontal and vertical directions by operating the key input unit 130.

Alternatively when the menu item for positioning the auxiliary screen is not selected, the control unit 140 checks whether the menu item adjusting the size of the auxiliary screen is selected in step S250.

Upon selecting in step S250 the menu item for adjusting the size of the auxiliary screen , the control unit 140 adjusts the size of the auxiliary screen accordingly in step S260. Particularly, the user can adjust the size of the auxiliary screen, which is displayed on the display unit 190. Alternatively, the user can cause the auxiliary screen to be displayed in the full screen mode.

Upon not selecting in step S250 the menu item for adjusting the size of the auxiliary screen, the control unit 140 checks if the menu item for switching the main and auxiliary screens is selected in step S270.

Upon selecting the menu item for switching the main and auxiliary screens , the control unit 140 switches the images displayed on the main and auxiliary screens with each other in step S280. For example, when the menu for switching the main and auxiliary screens is selected while the first and second digital broadcast data are outputted to the main and auxiliary screens, respectively, as shown in FIG. 4A, the control unit 140 causes the first and second digital broadcast data to be inputted to the auxiliary and main screens, respectively, as shown in FIG. 4Bb.

As such, the digital broadcast receiver terminal according to the present invention can edit the auxiliary screen while the first and second digital broadcast data are outputted to the main and auxiliary screens, respectively, according to the steps shown in FIG. 3.

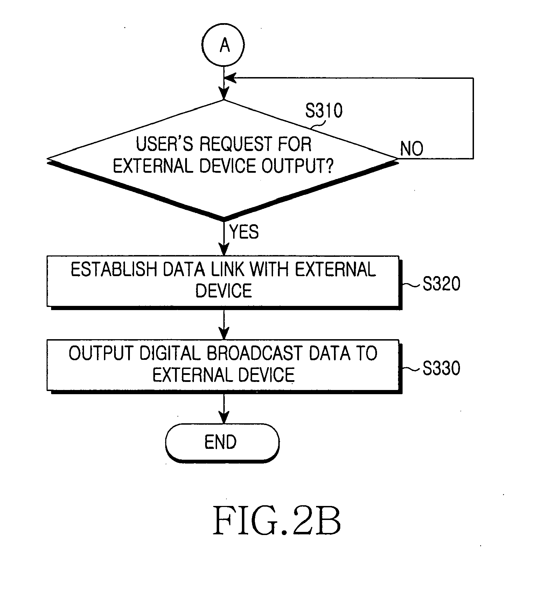

Referring to FIG. 2B, the control unit 140 checks if the user makes a request for external device output while the first and second digital broadcast data are outputted to the main and auxiliary screens, respectively in step S310. For example, the request for external device output can be TV-OUT request,

The control unit 140 establishes a data link with the external device at the user's request for external device output in step S320. The data link can be established in a wired/wireless manner.

After establishing the data link with the external device, the control unit 140 selectively outputs one of the first and second digital broadcast data to the external device in step S330. For example, the control unit 140 can output the first and second digital broadcast data to the display unit 190 and the external device, respectively. Referring to FIG. 2A, the control unit 140 checks if the second digital broadcast data stored in the memory 150 is completely outputted in step S 180. After completely outputting the stored second digital broadcast data, the control unit 140 terminates the output of the second digital broadcast data and outputs the first digital broadcast data in the full screen mode in step S 190.

As described herein, the inventive method is advantageous in that it can store a portion of a digital broadcast, which a user fails to watch due to an incoming call, and output the portion on a separate screen after the call. Therefore, the user does not need to watch a rebroadcast. This improves the user convenience.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for outputting a digital broadcast with a digital broadcast receiver terminal, the method comprising the steps of:
storing first digital broadcast data as second digital broadcast data by the digital broadcast receiver terminal from a moment when an incoming call is connected while the first digital broadcast data is output; and
outputting the first and second digital broadcast data simultaneously to a digital broadcast output screen when connection of the incoming call is terminated.

2. The method as claimed in claim 1, wherein the step of storing first digital broadcast data comprises:
notifying a user of an incoming call when there is an incoming call while the first digital broadcast data is output;
displaying a message for asking the user if the user wants to maintain output of the first digital broadcast data; and
connecting the incoming call while maintaining the output of the first digital broadcast data when the user replies that the user wants to maintain the output of the first digital broadcast data.

3. The method as claimed in claim 2, further comprising stopping output of audio signals regarding the first digital broadcast data, when the incoming call is connected, and outputting audio signals regarding the incoming call.

4. The method as claimed in claim 1, wherein, in the step of outputting the first and second digital broadcast data, images of the first and second digital broadcast data are output to main and auxiliary screens, respectively.

5. The method as claimed in claim 4, wherein, in the step of outputting the first and second digital broadcast data, audio signals of digital broadcast data output to the main and auxiliary screens are output via respective speakers when the digital broadcast receiver terminal has two speakers.

6. The method as claimed in claim 4, wherein, when an external output device is connected to the digital broadcast receiver terminal, audio signals of digital broadcast data outputted to the auxiliary screen are output via an external output device.

7. The method as claimed in claim 6, wherein the external output device is one of an external speaker and an earphone.

8. The method as claimed in claim 4, wherein, in the step of outputting the first and second digital broadcast data, images of the first and second digital broadcast data are output to the main and auxiliary screens, respectively, in a picture-in-picture mode.

9. The method as claimed in claim 4, wherein the step of outputting the first and second digital broadcast data comprises:
displaying an auxiliary screen editing menu when a user makes a request for editing the auxiliary screen; and
editing the auxiliary screen in accordance with an editing menu selected by the user.

10. The method as claimed in claim 9, wherein the auxiliary screen editing menu has a menu item for positioning the auxiliary screen in horizontal and vertical directions, a menu item for adjusting a size of the auxiliary screen, and a menu item for switching images outputted to the main and auxiliary screens with each other.

11. The method as claimed in claim 4, wherein, in the step of outputting the first and second digital broadcast data, the first digital broadcast data is output in a full screen mode when the second digital broadcast data is completely outputted.

12. The method as claimed in claim 1, further comprising:
establishing a data link with an external device when a user makes a request for external device output; and
outputting one of the first and second digital broadcast data to the external device.

13. The method as claimed in claim 12, wherein, in the step of establishing a data link, a one of wired and a wireless data link is established.
